Europäisches Patentamt

European Patent Office

Office européen des brevets

(11) Publication number: **0 132 361**
A2

# EUROPEAN PATENT APPLICATION

(21) Application number: 84304846.3

(22) Date of filing: 16.07.84

(51) Int. Cl.⁴: **H 02 P 5/408**

(30) Priority: 16.07.83 US 514567

(43) Date of publication of application: 30.01.85
Bulletin 85/5

(84) Designated Contracting States: **BE DE FR GB IT NL SE**

(71) Applicant: **BURROUGHS CORPORATION (a Michigan corporation)**, Burroughs Place, Detroit, Michigan 48232 (US)

(72) Inventor: **Koss, William Junior**, 6503 Lyn Road, Orlando Florida 32810 (US)
Inventor: **Geis, Timothy R.**, 112 Ambergate Road, Winter Park Florida 37792 (US)

(74) Representative: **Kirby, Harold Douglas Benson et al**, G.F. Redfern & Company Marlborough Lodge 14 Farncombe Road, Worthing West Sussex BN11 2BT (GB)

(54) **Motor speed control circuit.**

(57) A speed control switching circuit for a synchronous motor having windings to which identical switching circuits are coupled. Each switching circuit includes two transistors which are turned on and off alternately to drive current first in one direction through its winding and then in the other direction through its winding. When a transistor is turned off, the current through the winding decreases, and this current drop is sensed, and, at a predetermined dropoff point, the other transistor is turned on.

-1-

## TITLE
MOTOR SPEED CONTROL CIRCUIT

## BACKGROUND OF THE INVENTION

There are many instances in present day electronic applications where the speed of a motor must be accurately controlled, and it is known to drive a motor by means of transistor-pairs to operate each pair in turn to send current through a winding, first in one direction and then in the other. In optimum operation of such a semiconductor switching system, one pair of transistors would turn on immediately after the other turns off. However, a current storage phenomenon may prevent this, and, under certain circumstances, both sets of transistors may stay on and a short circuit develops around the motor winding. This can damage the drive circuitry. If a short time period is provided between the turn-off of one pair of transistors and the turn-on of the other, this problem is avoided.

Various solutions for this problem have been suggested in the prior art; however, none is as satisfactory as that provided by the present invention.

## DESCRIPTION OF THE DRAWINGS

Fig. 1 (1A and 1B) is a schematic showing of the drive circuit of the invention;

Fig. 2 is a more detailed schematic representation of portions of the circuit of Fig. 1;

Fig. 3 shows some of the waveforms which are used in the motor drive circuits; and

Fig. 4 shows some of the waveforms in the associated logic circuit for the motor drive circuits.

DESCRIPTION OF THE INVENTION

The system of the invention 10 includes a hysteresis synchronous motor which drives apparatus (not shown) whose speed of rotation must be accurately controlled. The motor is not shown in detail but is represented by two windings 20 and 22, each of which has identical switching circuits 30A and 30B connected to it. The windings 20 and 22 are driven by signals generated by circuits 30A and 30B, which are 90$^{\circ}$ out of phase with each other. Corresponding elements of circuits 30A and 30B carry the same reference numeral, but those in circuit 30A carry the letter A and those in circuit 30B carry the letter B.

Circuit 30A includes an input lead 40A coupled through an inverter 50A and a resistive path 60A to base 70A of a transistor 80A, which has its emitter 90A connected to the base 100A of a transistor 110A and its collector 112A connected to a bus 114A. The transistor 110A has its emitter 120A connected to a bus 130A and its collector 140A connected to the collector 150A of a transistor 160A whose emitter 170A is connected to a bus 180A.

Circuit 30A also includes similar circuitry in which an input lead 190A is coupled through an inverter 200A and a resistive path 210A to the base 220A of a transistor 230A which has its emitter 240A connected to the base 250A of a transistor 260A and its collector 242A connected to a lead 244A to ground. The transistor 260A has its emitter 270A connected to bus 130A and its collector 280A connected to the collector 290A of a transistor 300A whose emitter 310A is connected to the bus 180A. Bus 130A is connected between the bases of transistors 80A and 230A, and bus 180A is connected between the emitters of transistors 160A and 300A. Collector 112A of transistor 80A is connected by bus 114A to the base of transistor 300A and to ground.

Motor winding 20 is connected, as shown, between the connected collectors of transistors 110A and 160A and the connected collectors of transistors 260A and 300A .

A plurality of current-sensing resistors 320A are connected in parallel between bus 180A and ground. One resistor of suitable value might also be used instead of several.

In circuit 30A, bus or lead 180A is an output current-sensing lead and is connected to one input of a comparator 330A which has the second comparator voltage set within it by a voltage divider. The comparator has an output which is coupled by lead 340A to a switching circuit 350A having outputs $\phi$A and $\overline{\phi A}$. Output $\phi$A is connected to input lead 40A, and output $\overline{\phi A}$ is connected to input lead 190A.

A master clock 344, which generates clock pulses, is coupled to the switching circuit 350A along with the output of the comparator 330A.

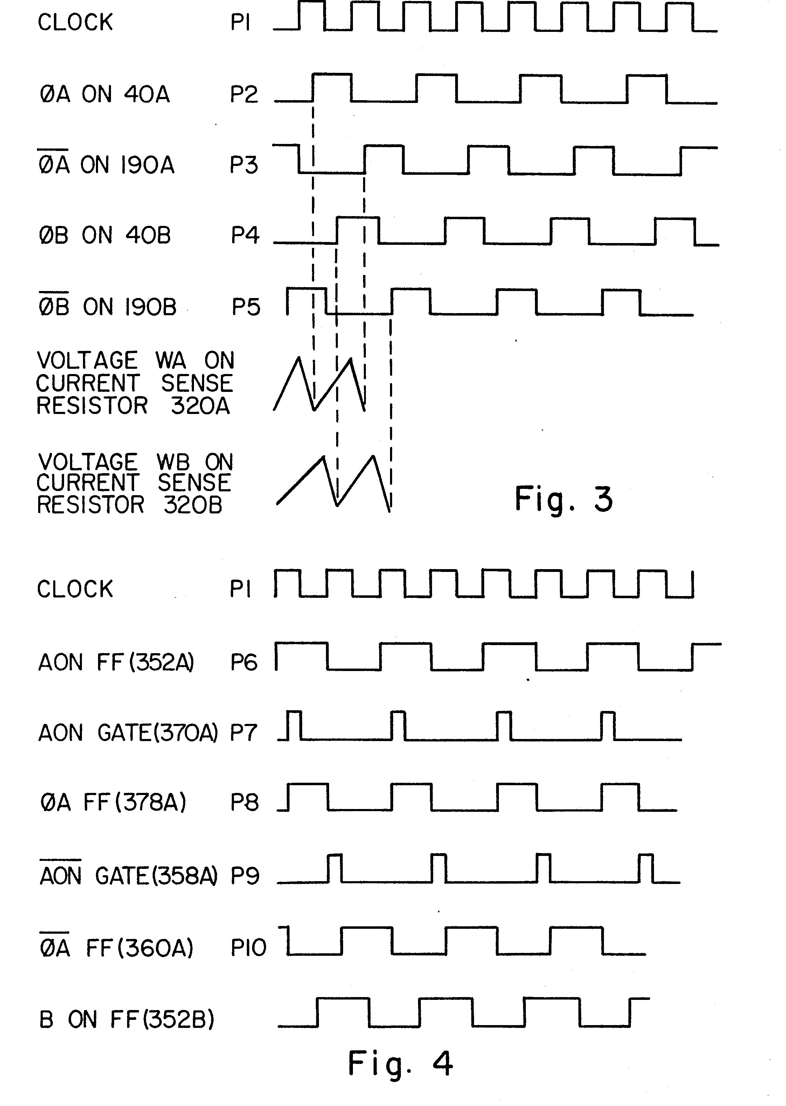

The operation of the system of the invention is described in sections, with the operation of the drive transistor circuit 30A being described first. The waveforms used in this portion of the circuit are shown in Fig. 3.

In operation of the circuit portion 30A of the invention, when the system is turned on, a pulse $\overline{\phi A}$ (P3) on lead 190A causes transistors 160A and 260A to turn off, and the current wave W begins to fall from its peak value. This current flows from the 24 volt supply through these transistors 160A and 260A through the winding 20 in one direction to ground. As the current falls off and the voltage generated across the resistors 320A falls off, this change is sensed on lead 180A. At a preset lower level of this current and voltage appearing on lead 180A, the comparator 330A and switch circuit 350A operate to put a pulse $\emptyset$A (P2) on lead 40A which turns on transistors 110A and 300A. this generates the current wave W to a peak, and it causes current to flow from the 24 volt supply through these transistors 110A and 300A and through the winding 20 in the opposite direction to ground, Then, when the pulse $\emptyset$A on lead 40A is terminated, it turns off transistors 110A and 300A, and, as the current and voltage fall off across resistors 320A, a pulse $\overline{\emptyset A}$ is generated which turns on transistor 160A and 260A again, and this cycle of events is repeated.

Similar operations take place in switching circuit 30B and in the motor winding 22, and the pulses $\emptyset$B (P4) and $\overline{\emptyset B}$ (P5) and voltage W are shown in Fig. 3.

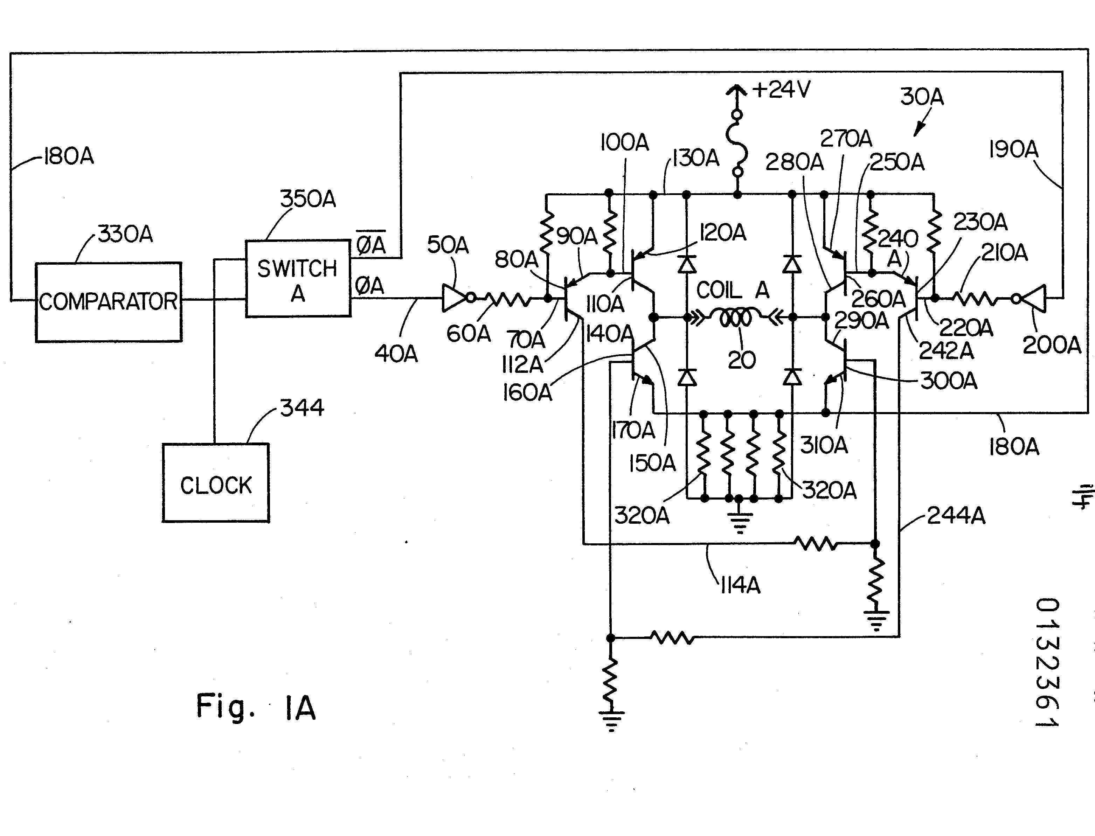

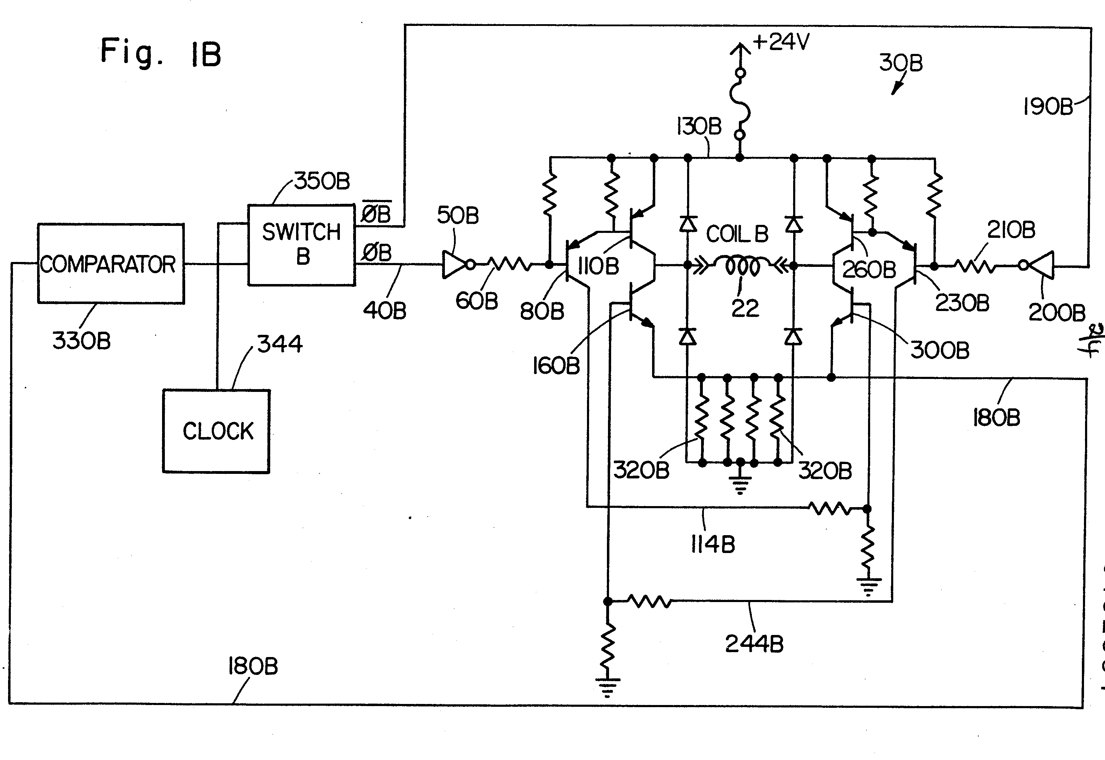

Referring to Fig. 1, the associated circuit which drives the transistor-pairs operates as follows. When a transistor-pair is turned on, a voltage is continually coupled on lead 180A to one input of the comparator circuit 330A. When this voltage falls to the level at which the other input of the comparator is set by a voltage divider, an output pulse appears on line 340A from the comparator, and this is coupled to one input of the switching circuit 350A, the second input of which is coupled to the clock 344. The outputs from the switching circuit 350A are coupled to leads 40A and 190A, and the swtiching circuit produces a series of positive and negative pulses on these leads, with one series being 180° out of phase with the other and somewhat delayed to provide the required turn-off and turn-on described above.

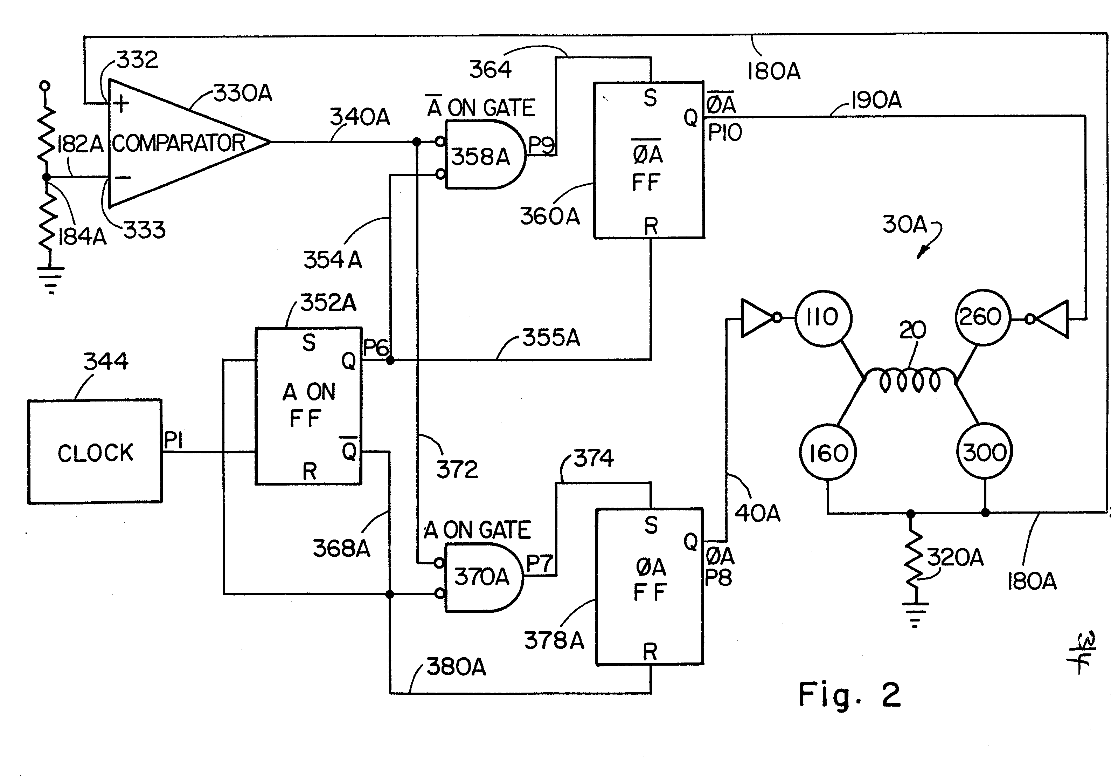

The comparator and switching circuits are shown in greater detail in Fig. 2. The comparator circuit 330A includes one input 332A, to which lead 180A is coupled, and a second input 333A which is set at a desired voltage by way of a voltage divider 184A and lead 182A.

The switching circuit 350A has clock 344 coupled to a first toggle flip-flop 352A which has its Q output coupled by lead 354A to one input of a two low true AND gate 358A, the other input of which is coupled to lead 340A from the output of the comparator 330A. The Q output of the flip-flop 352A is also coupled by lead 355A to the reset (R) of a second set-reset flip-flop 360A.

The output of the AND gate 358A is coupled by lead 364A to the set input (S) of the second flip-flop 360A. The Q output of the second flip-flop 360A is connected to lead 190A which runs to the input of drive transistor 230A.

The $\overline{Q}$ output of the first flip-flop 352A is connected by lead 368A to one input of a second (two low true) AND gate 370A, the second input of which is connected by lead 372A to lead 340A from the comparator 330A. The output of the second AND gate 370A is connected by lead 374A to the set input (S) of a third set-reset flip-flop 378A, and the reset (R) of the third flip-flop is connected by lead 380A to the $\overline{Q}$ output of the first flip-flop 352A. The Q output of the third flip-flop 378A is connected to lead 40A and to the input of transistor 110A.

The circuit shown in Fig. 2 operates as follows, with some of the pulses shown in Fig. 4. With each clock pulse P1 coupled into the flip-flop 352A, a positive pulse P6 is generated at the Q output of the flip-flop 352A and is applied to one input of the AND gate 358A and to the reset of flip-flop 360A. At the same time, a negative pulse appears on the $\overline{Q}$ output, and this is applied to one of the inputs of the AND gate 370A and to the reset of the flip-flop 378A. At intervals, as described above, the comparator 330A also couples pulses to the AND gates 358A and 370A, and these AND gates operate alternately with pulses P9 and P7, respectively, to energize the flip-flops 360A and 378A to generate the pulses P10 and P8, respectively, and to cause the pairs of transistors to turn on and to turn off, as described above.

Thus, a string of clock pulses produces a string of positive and negative pulses P10 and P8 on leads 190A and 40A, with the pulses on line 40A being 180° out of phase with the pulses on line 190A. These pulses have a suitable relative delay caused by the time it takes for the voltage across resistors 320A to fall to the level at which the switching operation is produced.

The comparator circuit includes one input from lead 180A which senses the voltage across the resistors 320A, the other input of which is set from the voltage divider 184A. An output pulse appears on line 340A from the comparator, and this is coupled to the second input of each of the AND gates 358A and 370A, and it is the appearance of these pulses which control the switching of the pairs of transistors.

The circuit for driving motor winding 22 is identical to that described above except that the drive signals are 90° out of phase with the drive signals used in driving winding 20.  The $90^{\circ}$ phase shift is achieved by coupling the clock pulses from clock 344 through a lead and an inverter to the first flip-flop 352B of the circuit for driving winding 22.

What is claimed is:

1.        A motor speed control circuit comprising a motor winding, a first pair of active current flow devices coupled in circuit with said winding between a voltage source and ground and adapted to pass current in one direction through said winding, a second pair of active current flow devices coupled in circuit with said winding between said voltage source and ground and adapted to pass current in the opposite direction through said winding, resistor means in circuit with both of said pairs of active devices and receiving said current when it flows through said winding in either direction and generating a voltage from said current, first means for turning on and off said first pair of active devices and said second pair of active devices, said first means being operable to turn off one pair of active devices and then turn on the other pair of active devices, and second means coupled to said resistor means and operable, when the voltage across said resistor means drops to a predetermined level after one of said pairs of active devices turns off, to turn on the other pair of active devices.

2.    A motor speed control circuit comprising
a motor winding,
first semiconductor current flow means coupled in
circuit with said winding and a voltage
source and adapted to pass current in one
direction through said winding,
second semiconductor current flow means coupled in
circuit with said winding and said voltage
source and adapted to pass current in the
opposite direction through said winding,
resistor means in circuit with both of said
semiconductor current flow means and
receiving said current when it flows
·through said winding in either direction
and generating a voltage from said current,
first means for turning on and off said first
semiconductor current flow means and said
second semiconductor current flow means,
said first means being operable to turn
off one of said semiconductor current flow
means and then turn on the other of said
semiconductor current flow means, and
second means coupled to said resistor means and
operable, when the voltage across said
resistor means drops to a predetermined
level after one of said semiconductor current
flow means turns off, to turn on the other
semiconductor current flow means.

0132361

3.      A motor speed control circuit comprising a motor winding,

a first transistor pair coupled in circuit with said winding and a voltage source and adapted to pass current in one direction through said winding,

a second transistor pair coupled in circuit with said winding and said voltage source and adapted to pass current in the opposite direction through said winding,

resistor means in circuit with both of said transistor pairs and receiving said current when it flows through said winding in either direction and generating a voltage from said current,

first means for turning on and off said first transistors pairs and said second transistor pairs, said first means being operable to turn off one of said transistor pairs and then turn on the other of said transistor pairs, and

second means coupled to said resistor means and operable, when the voltage across said resistor means drops to a predetermined level after one of said transistor pairs turns off, to turn on the other of said transistor pairs.

4.    The circuit defined in Claim 3 wherein said second means comprises a comparator which is coupled to and senses the voltage across said resistor means, the output of said comparator being coupled to said first means.

5.    The circuit defined in Claim 3 wherein said first means comprises a switching circuit and said second means comprises a comparator which is coupled to and senses the voltage across said resistor means, the output of said comparator being coupled to and operating said first means.

6.    ˙The circuit defined in Claim 5 wherein said switching circuit has two outputs, one output being connected to said first transistor pair and the other being connected to said second transistor pair.

Fig. IA

Fig. 1B

Fig. 2

0132361

4/4

| CLOCK | PI | |
| --- | --- | --- |

ØA ON 40A P2

$\overline{ØA}$ ON 190A P3

ØB ON 40B P4

$\overline{ØB}$ ON 190B P5

VOLTAGE WA ON
CURRENT SENSE
RESISTOR 320A

VOLTAGE WB ON
CURRENT SENSE
RESISTOR 320B

Fig. 3

CLOCK PI

AON FF (352A) P6

AON GATE(370A) P7

ØA FF(378A) P8

$\overline{AON}$ GATE(358A) P9

$\overline{ØA}$ FF(360A) PIO

B ON FF(352B)

Fig. 4